# EUROPEAN PATENT SPECIFICATION

(11) **EP 3 839 690 B1**
(45) Date of publication and mention of the grant of the patent: **01.03.2023**
(21) Application number: 19856712.5
(22) Date of filing: 26.08.2019
(51) Int. Cl.: F24S 30/42, G05D 3/00

(54) **QUANTITATIVE OUTPUT APPARATUS AND GROUP-CONTROL TRACKING SUPPORT**
QUANTITATIVES AUSGABEGERÄT UND GRUPPENKONTROLLVERFOLGUNGSUNTERSTÜTZUNG
APPAREIL DE SORTIE QUANTITATIVE ET SUPPORT DE SUIVI DE COMMANDE DE GROUPE

(30) Priority: 07.09.2018 CN 201811046423
(43) Date of publication of application: 23.06.2021
(73) Proprietor: Shanghai Sipoo New Technology Co., Ltd., Shanghai 201203 (CN)
(72) Inventor: BAO, Weiming, Shanghai 201203 (CN)
(74) Representative: Steinecke, Peter
(86) International application number: PCT/CN2019/102653
(87) International publication number: WO 2020/048344

(56) References cited:
- EP-A1- 2 837 899
- EP-A2- 1 635 128
- WO-A1-2010/116007
- WO-A1-2016/187044
- CN-A- 102 073 321
- CN-A- 102 278 830
- CN-A- 108 717 303
- CN-B- 104 156 000
- CN-U- 202 257 278
- CN-U- 208 722 057
- US-A1- 2015 323 224
- US-A1- 2015 377 520

## Description

### Technical field

The present invention relates to the technical field of structural corfiguratuin of a driving device and a sub-tracking support, and in particular to a quantitative output apparatus and a group-control tracking support.

### Technical background

With the development of society, traditional fuel energy is on the decline in resource and the harm to the environment is becoming more and more prominent. This greatly promotes the use and development of renewable energy. Humans hope that renewable energy can change the energy structure and maintain long-term sustainable development. Among numerous renewable energy sources, solar energy has become the focus of attention due to its unique advantages. Abundant solar radiation energy is an important energy source. It is an inexhaustible, pollution-free, cheap, and freely available energy source for humans.

In the prior art, in order to improve the conversion rate of solar energy, a photovoltaic tracking system has appeared, the purpose of which is to improve the conversion rate of solar energy by tracking the irradiation angle of sunlight. According to the existing sub-tracking supports, transmission devices are controlled to operate and stop intermittently through a main controller in general, so as to intermittently adjust the angles of sub-tracking supports. In this way, the motors need to be turned on and off multiple times, which will increase the energy consumption of driving devices. Moreover, frequent switching on and off of the motors is very easy to cause their operation failure, and the control method is complicated. Thus, they need to be continuously monitored.

Therefore, the present application is dedicated to providing a quantitative output apparatus and a group-control tracking support.

Document US2015/377520 discloses a quantitative output apparatus corresponding to the preamble of claim 1 and a group control method using such an apparatus.

### Summary of the invention

An objective of the present invention is to provide a quantitative output apparatus and a group-control tracking support, which can simplify the control mode and run stably and reliably.

The technical solution provided by the present invention is as follows:
a quantitative (= quantitatively metering) output apparatus, comprising: an actuator comprising an output wheel, an auxiliary wheel and a passage portion; a transmission rope guided between the output wheel and the auxiliary wheel and passing through the passage portion; and a driving device for driving the transmission rope to move in the passage portion of the actuator; wherein the transmission rope comprises a thick rope portion and a thin rope portion; when the thin rope portion passes through the passage portion, the thin rope portion does not drive the output wheel to rotate; and when the thick rope portion passes through the passage portion, the thick rope portion frictionally drives the output wheel to rotate.

Preferably, the output wheel and the auxiliary wheel are arranged in parallel, the passage portion is a gap between the auxiliary wheel and the output wheel, the gap is greater than a diameter of the thin rope portion and less than a diameter of the thick rope portion, and when the thick rope portion of the transmission rope passes through the passage portion, the auxiliary wheel applies pressure to the transmission rope, so that the thick rope portion is tightly attached to the output wheel and frictionally drives the output wheel to rotate.

Preferably, the output wheel and the auxiliary wheel are arranged in parallel, the passage portion is an annular groove arranged on an outer periphery of the output wheel, a groove width of the annular groove is greater than a diameter of the thin rope portion and less than a diameter of the thick rope portion, and when the thick rope portion of the transmission rope passes through the passage portion, the auxiliary wheel applies pressure to the transmission rope, so that the thick rope portion is tightly attached to the output wheel and frictionally drives the output wheel to rotate.

Preferably, a rotatable sleeve is provided in the annular groove, and when the thin rope portion of the transmission rope passes through the passage portion, the auxiliary wheel applies pressure to the transmission rope, so that the thin rope portion is tightly attached to the sleeve and drives the sleeve to rotate.

Preferably, the annular groove is configured as a stepped groove comprising a first annular groove and a second annular groove, wherein a groove width of the first stepped groove is not less than the diameter of the thin rope portion, and not greater than the diameter of the thick rope portion, a groove width of the second stepped groove is not less than the diameter of the thick rope portion, and a sleeve is provided in the first stepped groove.

Preferably, the actuator comprises one auxiliary wheel, the auxiliary wheel is arranged at one side of the output wheel, the transmission rope is wound around the auxiliary wheel and the output wheel, and the transmission rope passes through the auxiliary wheel and the output wheel to form an S-shaped structure; or, the actuator comprises a pair of auxiliary wheels, the pair of auxiliary wheels is arranged at two sides of the output wheel, and the pair of the auxiliary wheels presses the transmission rope from both (opposite) sides of the output wheel; and along a moving direction of the transmission rope, in the actuator, the transmission rope is first wound on one of the auxiliary wheels, then wound on the output wheel, and finally wound on the other auxiliary wheel.

Preferably, the transmission rope comprises multiple sections of thick rope portions and multiple sections of thin rope portions, and the thick rope portions and the thin rope portions are arranged at intervals.

Preferably, the auxiliary wheel is connected to a support through an elastic member, and when the thick rope portion of the transmission rope passes through the actuator, the auxiliary wheel applies pressure to the transmission rope, so that the transmission rope is tightly attached to the output wheel.

A group-control tracking support, comprising the quantitative output apparatus described above, wherein there are a plurality of actuators in the quantitative output apparatus, and the plurality of actuators are connected in series on the transmission rope; and the group control system further comprises a plurality of sub-tracking supports, the sub-tracking supports are in one-to-one correspondence with the actuators, and input shafts of the sub-tracking supports are drivingly connected to the output wheels of the actuators.

A quantitative output method, wherein a driving device drives a transmission rope to move, the transmission rope comprising a thin rope portion and a thick rope portion connected along a running direction thereof, and the transmission rope being guided between an output wheel and an auxiliary wheel of an actuator and passing through a passage portion of the actuator; when the thin rope portion of the transmission rope passes through the passage portion of the actuator, the thin rope portion of the transmission rope does not drive the output wheel to rotate; when the thick rope portion of the transmission rope passes through the passage portion of the actuator, the auxiliary wheel applies pressure to the transmission rope so that the transmission rope is tightly attached to the output wheel, and the thick rope portion of the transmission rope frictionally drives the output wheel of the actuator to rotate; and the thin rope portion(s) and the thick rope portion(s) in the transmission rope are arranged in a preset manner, and the transmission rope drives the actuator to operate according to preset rules.

A group control method, wherein a driving device drives a transmission rope to move, the transmission rope comprising a thin rope portion and a thick rope portion connected along a running direction thereof, and the transmission rope being sequentially guided between output wheels and auxiliary wheels of a plurality of actuators and passing through passage portions of the actuators; when the thin rope portion of the transmission rope passes through the passage portions of the actuators, the thin rope portion of the transmission rope does not drive the output wheels to rotate; when the thick rope portion of the transmission rope passes through the passage portions of the actuators, the auxiliary wheels apply pressure to the transmission rope so that the transmission rope is tightly attached to the output wheels, and the thick rope portion of the transmission rope frictionally drives the output wheels of the actuators to rotate, and the output wheels drive input shafts of sub-tracking supports correspondingly connected to the actuators; and the thin rope portion(s) and the thick rope portion(s) in the transmission rope are arranged in a preset manner, and the transmission rope drives a plurality of the sub-tracking supports to operate according to preset rules.

The quantitative output apparatus and group-control tracking support provided by the present invention can bring at least one of the following beneficial effects:
1. The transmission rope in the quantitative output apparatus disclosed by the present invention comprises a thick rope portion and a thin rope portion of different diameters, wherein when the thin rope portion passes through the passage portion in the actuator, it does not drive the output wheel to rotate, and when the thick rope portion passes through the passage portion, it drives the output wheel to rotate, so that the driving device can be in a state of always running; and the operation of the output wheel is controlled by the thin rope portion of a certain length and the thick rope portion of a certain length preset on the transmission rope, which can not only ensure the stable operation of the quantitative output apparatus, but also effectively simplify the control mode of the driving device and improve its operating efficiency.
2. In the present invention, the passage portion may be a gap between the output wheel and the auxiliary wheel, or may be an annular groove provided on the output wheel, wherein a sleeve may be provided in the annular groove, and frictionally driving the output wheel is avoided by the sleeve when the thin rope portion passes through the annular groove.
3. The auxiliary wheel may apply pressure to the transmission rope only when the thick rope portion passes through the passage portion, so that the transmission rope is pressed against the output wheel, and the auxiliary wheel may also always apply pressure to the transmission rope, so that the transmission rope is always in a compressed state.
4. In the present invention, the auxiliary wheel in the actuator is fixed on the support through the elastic member, so that the transmission rope can have a certain buffer when passing through the actuator, avoiding the transmission rope running too fast and damaging the actuator.
5. The group-control tracking support of the present invention can remotely control the operation of a plurality of sub-tracking supports with remotely controlling a transmission rope by means of connecting a plurality of actuators in series on the transmission rope, the control mode is simple, and it is easy to operate, and operates stably and reliably.
6. The control manner used in the quantitative output method and the group control method of the present invention can realize that only one or several actuators can be driven at the same time, thereby driving more loads with a smaller driving force.

### Brief description of the drawings

Hereinafter, the preferred embodiments will be described in a clear and easy-to-understand manner in conjunction with the drawings to further illustrate the above characteristics, technical features, advantages and implementations of the present invention.
Fig. 1 is a schematic structural view of a specific embodiment of a quantitative output apparatus of the present invention;
Fig. 2 is a schematic structural view of the quantitative output apparatus shown in Fig. 1 in another state;
Fig. 3(a) is a schematic structural view of another specific embodiment of the quantitative output apparatus of the present invention;
Fig. 3(b) is a cross-sectional view of an output wheel in the quantitative output apparatus shown in Fig. 3(a);
Fig. 4(a) is a schematic structural view of the quantitative output apparatus shown in Fig. 3(a) in another state;
Fig. 4(b) is a cross-sectional view of an output wheel in the quantitative output apparatus shown in Fig. 4(a);
Fig. 5 is a schematic structural view of another specific embodiment of an actuator in the quantitative output apparatus of the present invention;
Fig. 6(a) is a schematic structural diagram of another specific embodiment of the quantitative output apparatus of the present invention;
Fig. 6(b) is a cross-sectional view of an output wheel in the quantitative output apparatus shown in Fig. 6(a);
Fig. 7(a) is a schematic structural view of the quantitative output apparatus shown in Fig. 6(a) in another state;
Fig. 7(b) is a cross-sectional view of an output wheel in the quantitative output apparatus shown in Fig. 6(a);
Fig. 8 is a schematic structural view of another specific embodiment of an actuator in the quantitative output apparatus of the present invention;
Fig. 9 is a schematic structural view of the actuator shown in Fig. 8 in another direction;
Fig. 10 is a schematic structural view of a specific embodiment of a group-control tracking support of the present invention;
Fig. 11 is a schematic structural view of another specific embodiment of the group-control tracking support of the present invention;
Fig. 12 is a schematic structural view of another specific embodiment of the group-control tracking support of the present invention;
Fig. 13(a) is a schematic structural view of a dual-degree-of-freedom slewing mechanism in the group-control tracking support shown in Fig. 12; and
Fig. 13(b) is an enlarged schematic view of a partial structure of the dual-degree-of-freedom slewing mechanism shown in Fig. 13(a).

Description of the reference symbols / numerals:
actuator 1, output wheel 11, first annular groove 111, second annular groove 112, bearing 113, auxiliary wheel 12, spring 13, support 14, first vertical plate 141, second vertical plate 142, bottom plate 143, connecting rod 144, fixing bar 145, input shaft 15, and output shaft 16;
transmission rope 2, thin rope portion 21, and thick rope portion 22;
driving device 3; sub-tracking support 4, photovoltaic assembly board 41, sub-transmission rope 42, dual-degree-of-freedom slewing mechanism 44, first slewing mechanism 441, input shaft 4411, output shaft 4412, second slewing mechanism 442, input shaft 4421, output shaft 4422, and fixing plate 4423.

### Detailed description of the embodiments

In order to explain the embodiments of the present invention or the technical solutions in the prior art more clearly, the specific embodiments of the present invention will be described below with reference to the drawings. It would be obvious for those of ordinary skill in the art that the drawings in the following description are only some of the embodiments of the present invention, other drawings may be obtained from these drawings without making creative efforts, and other implementations are obtained. In order to make the drawings concise, each figure only schematically shows parts related to the present invention, and they do not represent their actual structure as a product.

### Specific Embodiment 1

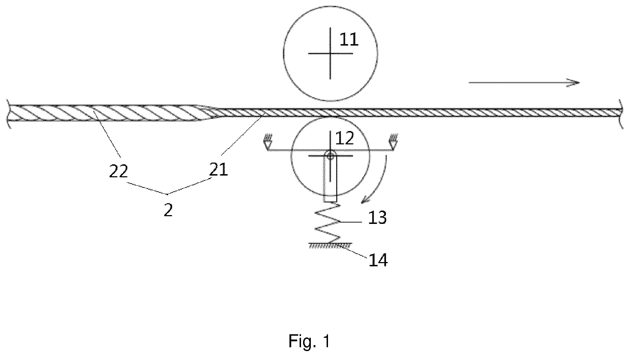

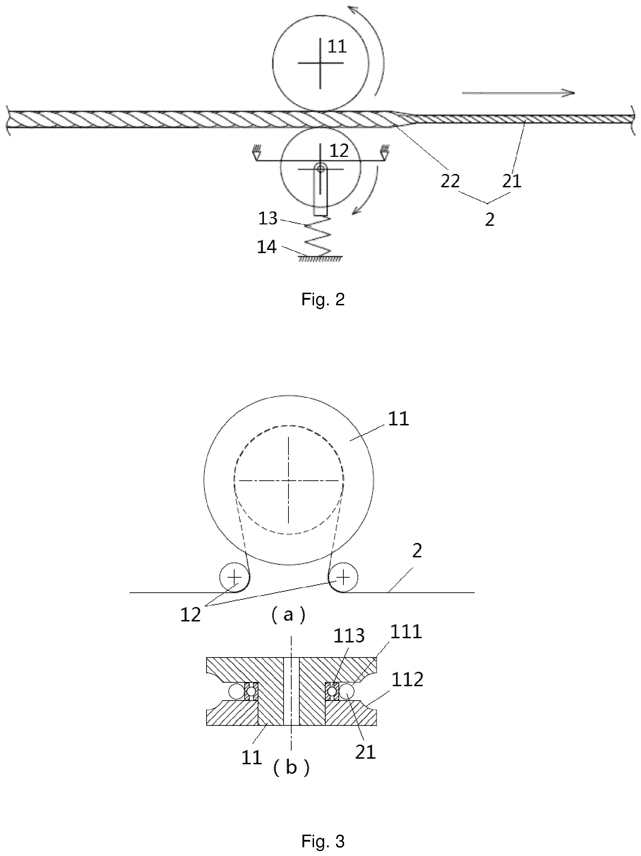

As shown in Figs. 1 and 2, disclosed in this specific embodiment is a quantitative output apparatus, including an actuator, a transmission rope and a driving device. The actuator includes one output wheel 11 and one auxiliary wheel 12. The auxiliary wheel 12 is located below the output wheel 11, and there is a gap between the output wheel 11 and the auxiliary wheel 12. In this embodiment, a passage portion of the actuator has a gap between the output wheel 11 and the auxiliary wheel 12. As shown in Figs. 1 and 2, the output wheel 11 and the auxiliary wheel 12 are arranged one above the other, and the transmission rope 2 horizontally passes through the gap between the output wheel 11 and the auxiliary wheel 12 in the passage portion. The driving device (not shown in the figures) is connected to the transmission rope 2 for driving the transmission rope 2 to move.

The transmission rope 2 includes a plurality of thin rope portions 21 and a plurality of thick rope portions 22 connected along its running direction (i.e. a direction indicated by the arrows in Figs. 1 and 2), and the plurality of thin rope portions 21 and the plurality of thick rope portions 22 are arranged at intervals. In this embodiment, the transmission rope 2 is a wirerope, and the diameter of the thin rope portion 21 is less than the gap between the output wheel 11 and the auxiliary wheel 12, and the diameter of the thick rope portion 22 is equal to or slightly greater than the gap between the output wheel 11 and the auxiliary wheel 12.

As shown in Fig. 1, when the thin rope portion 21 of the transmission rope 2 passes through the passage portion, the output wheel 11 of the actuator is in a stationary state. That is to say, when the thin rope portion 21 of the transmission rope 2 passes the passage portion, it does not drive the output wheel 11 to rotate. Specifically, when the thin rope portion 21 of the transmission rope 2 in this embodiment passes through the actuator, the thin rope portion 21 is in contact with the auxiliary wheel 12, but is not in contact with the output wheel 11. As shown in Fig. 2, when the thick rope portion 22 of the transmission rope 2 passes the passage portion, the auxiliary wheel 12 applies pressure to the transmission rope 2, so that the transmission rope 2 is tightly attached to the output wheel 11. Thus, the thick rope portion 22 of the transmission rope 2 frictionally drives the output wheel 11 in the actuator to rotate so as to further drive the actuator to start running.

In this specific embodiment, the auxiliary wheel 12 is connected to a support 14 through an elastic member. Specifically, the elastic member in this embodiment is a spring 13, and the arrangement of the spring allows the auxiliary wheel 12 to sufficiently press the thick rope portion 22 of the transmission rope 2 against the output wheel 11. In addition, the arrangement of the spring can further cause the gap between the output wheel 11 and the auxiliary wheel 12 to have a certain adjustment range, thereby forming a certain buffer when the transmission rope passes, so as to avoid damaging the actuator when the transmission rope moves.

A quantitative output method using the above quantitative output apparatus is further disclosed in this specific embodiment. The driving device drives the transmission rope 2 to move, the transmission rope 2 includes a thin rope portion 21 and a thick rope portion 22 connected along its running direction, and the transmission rope 2 is guided between the output wheel 11 and the auxiliary wheel 12 of the actuator. When the thin rope portion 21 of the transmission rope 2 passes through the passage portion, the output wheel 11 of the actuator is in a stationary state. That is to say, when moving, the thin rope portion 21 of the transmission rope 2 does not drive the output wheel 11 to rotate. When the thick rope portion 22 of the transmission rope 2 passes through the passage portion, the auxiliary wheel 12 applies pressure to the transmission rope 2, so that the transmission rope 2 is tightly attached to the output wheel 11, and the thick rope portion 22 of the transmission rope 2 frictionally drives the output wheel 11 of the actuator to rotate. The thin rope portion(s) 21 and the thick rope portion(s) 22 in the transmission rope 2 are arranged in a preset manner, and transmission rope 2 drives the actuator to operate according to preset rules. The preset manner here can be that a plurality of thick rope portions and a plurality of thin rope portions are arranged at intervals.

In this embodiment, the output wheel 11 is arranged above, the auxiliary wheel 12 is arranged below, and the auxiliary wheel 12 is connected to the support through a spring. When the thick rope portion 22 of the transmission rope 2 passes through the passage portion, the thin rope portion 21 of the transmission rope 2 is in contact with the auxiliary wheel 12, but is not in contact with the output wheel 11, so that the transmission rope 2 is impossible to drive the output wheel 11 to rotate when moving. Specifically, when the thick rope portion 22 of the transmission rope 2 passes through the passage portion, the spring applies force to the auxiliary wheel 12, so that the auxiliary wheel 12 further presses against transmission rope 2, and the thick rope portion 22 of the transmission rope 2 is tightly attached to the output wheel 11. Thus, the thick rope portion 22 of the transmission rope 2 can effectively drive the output wheel 11 when moving.

Of course, in other specific embodiments of the quantitative output apparatus and method of the present invention, the number of auxiliary wheels in the actuator and the manner it acts on the transmission rope can be adjusted according to actual needs. The auxiliary wheel may also be fixedly arranged on the support directly without the elastic member. At this time, the gap between the auxiliary wheel and the output wheel is fixed. The arrangement of the thin rope portion(s) and the thick rope portion(s) in the transmission rope, and the length setting of the both can be set according to the manner the actuator needs to output based on actual requirements. In addition, the manner in which the driving device drives the transmission rope to move can be specifically selected according to actual needs, and will not be repeated here.

### Specific Embodiment 2

Disclosed in this specific embodiment is another specific embodiment of the quantitative output apparatus of the present invention, the structure of which is substantially the same as that of Specific Embodiment 1 except that the structure of the actuator in this embodiment is different from that of Embodiment 1.

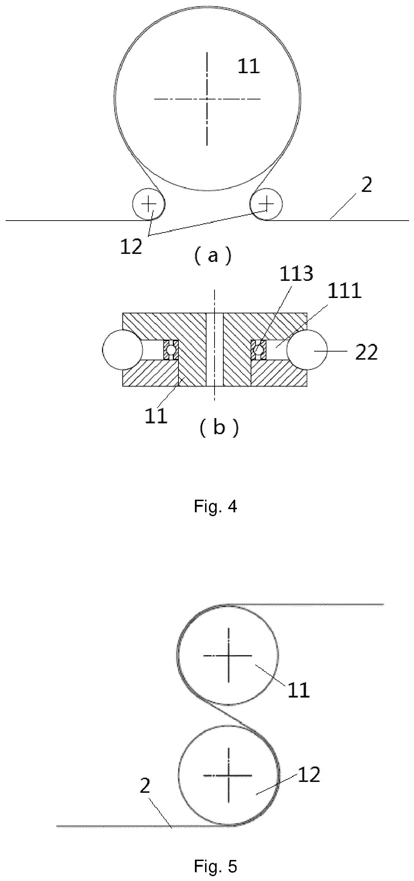

As shown in Figs. 3 and 4, in this embodiment, the actuator includes a pair of auxiliary wheels 12. The pair of auxiliary wheels 12 is symmetrically arranged at two sides of the output wheel 11, and the pair of auxiliary wheels 12 presses the transmission rope 2 from both (opposite) sides of the output wheel 11. Along the moving direction of the transmission rope 2, in the actuator, the transmission rope 2 is first wound on one of the auxiliary wheels 12, then wound on the output wheel 11, and finally wound on the other auxiliary wheel 12.

Specifically, the outer periphery of the output wheel 11 is provided with a stepped groove. In this embodiment, the stepped groove forms a passage portion of a mechanism in a shape with an inner and an outer circumference. The stepped groove includes a first annular groove 111 and a second annular groove 112. The first annular groove 111 is closer to the central axis of the output wheel 11 than the second annular groove 112, and the groove width of the first annular groove 111 is less than that of the second annular groove 112. The transmission rope in this embodiment is a wirerope, and the outer diameter of the thin rope portion of the wirerope is equal to or less than the groove width of the first annular groove. A bearing 113 is provided in the first annular groove 111. When the thin rope portion 21 of the transmission rope 2 passes through the passage portion, the thin rope portion 21 is located in the first annular groove 111 and the thin rope portion 21 is in contact with the outer circumferential surface of the bearing 113. Therefore, when the thin rope portion passes through the first annular groove, it can only drive the bearing to rotate but can not drive the output wheel to rotate. Moreover, in this embodiment, the output wheel has a split structure. Specifically, at least one of the side walls of the stepped groove of the output wheel is detachable. This arrangement is convenient to install the bearing in the first annular groove.

When the thick rope portion 22 of the transmission rope 2 passes through the passage portion, the thick rope portion 22 is located in the second annular groove 112, and the thick rope portion 22 frictionally drives the output wheel 11 to rotate. Specifically, the shape of the side wall of the second annular groove 112 is adapted to that of the thick rope portion 22 of the transmission rope 2. When the thick rope portion 22 of the transmission rope 2 passes through the passage portion, the transmission rope 2 is tightly attached to the side wall of the second annular groove 112. In this embodiment, the transmission rope is a wirerope, the outer diameter of the thick rope portion of the wirerope is equal to or slightly greater than the groove width of the second annular groove, and the side wall of the second annular groove is an arc-shaped side wall. When the thick rope portion passes through the passage portion, the wirerope is tightly attached to the second annular groove, and the wirerope can better frictionally drive the output wheel when moving.

Of course, in other specific embodiments, the two auxiliary wheels may also be arranged asymmetrically at two sides of the output wheel, as long as the two auxiliary wheels can cause the transmission rope to be tightly attached to the output wheel. In addition, the bearing in the first annular groove in the output wheel may be replaced by an ordinary sleeve or bush, as long as it can prevent the thin rope portion of the transmission rope from driving the output wheel to rotate when moving in the first annular groove.

### Specific Embodiment 3

Disclosed in this specific embodiment is another specific embodiment of the quantitative output apparatus of the present invention, the structure of which is substantially the same as that of Specific Embodiment 1 except that the structure of the actuator in this embodiment is different from that of Embodiment 1.

As shown in Fig. 5, in this specific embodiment, the actuator includes one auxiliary wheel 12. The auxiliary wheel 12 is arranged at one side of the output wheel 11. The transmission rope 2 is wound around the auxiliary wheel 12 and the output wheel 11, and the transmission rope 2 forms an S-shaped structure when passing through the auxiliary wheel 12 and the output wheel 11. Further, the structure of the output wheel in this embodiment is the same as the structure of the output wheel in the Embodiment 2. That is to say, the output wheel in this embodiment is also provided with a stepped groove, and when the transmission rope passes through the actuator, the thin rope portion of the transmission rope is located in the first annular groove of the output wheel, and the thin rope portion cannot drive the output wheel to rotate, and the thick rope portion is located in the second annular groove of the output wheel, and the thick rope portion can drive the output wheel to rotate. It can be seen from Fig. 5 that the wheel diameters of the output wheel 11 and the auxiliary wheel 12 in this embodiment are approximately the same. In other embodiments, the wheel diameter ratio of the two can be adjusted according to actual needs.

It needs to be noted that the stepped grooves in Embodiments 2 and 3 can each be set as an annular groove with a certain groove width. That is to say, an annular groove with a certain groove width is provided on the output wheel, and the groove width of the annular groove is greater than the diameter of the thin rope portion and less than the diameter of the thick rope portion. In this arrangement, when the transmission rope passes through the annular groove, the thin rope portion moves in the annular groove and cannot drive the output wheel to rotate, whereas the thick rope portion moves outside the annular groove, rubs against the surface of the output wheel, and drives the output wheel to rotate by means of friction force.

### Embodiment 4

Disclosed in this specific embodiment is another specific embodiment of the quantitative output apparatus of the present invention, the structure of which is substantially the same as that of Specific Embodiment 1 except that the structure of the actuator in this embodiment is different from that of Embodiment 1.

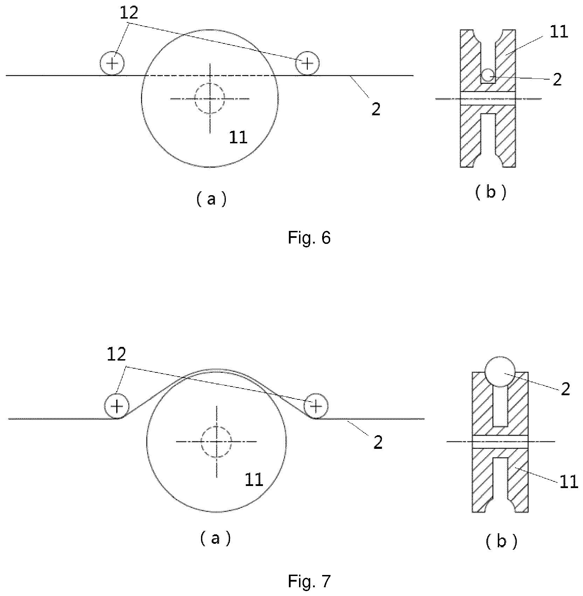

As shown in Figs. 6 and 7, in this embodiment, the actuator includes a pair of auxiliary wheels 12. The pair of auxiliary wheels 12 is symmetrically arranged at two sides of the output wheel 11, and the output wheel 12 is provided with an annular groove. The annular groove is the passage portion of the actuator, and the groove width of the annular groove is not less than the diameter of the thin rope portion of the transmission rope and not greater than the diameter of the thick rope portion. When the thin rope portion of the transmission rope passes through the annular groove, the thin rope portion passes from inside the annular groove, and the auxiliary wheel 12 does not apply pressure to the transmission rope. Thus, the thin rope portion is not pressed against the output wheel, and the thin rope portion cannot drive the output wheel by means of friction. When the thick rope portion of the transmission rope passes through the annular groove, the thick rope portion passes from inside the annular groove, and the auxiliary wheel 12 applies pressure to the transmission rope. At this time, the transmission rope is tensioned under the action of the auxiliary wheel, and the thick rope portion is pressed against the output wheel, and drives the output wheel by means of friction.

### Embodiment 5

Disclosed in this specific embodiment is another specific embodiment of the quantitative output apparatus of the present invention, the structure of which is substantially the same as that of Embodiment 1 except that the specific structure of the actuator in this embodiment is different.

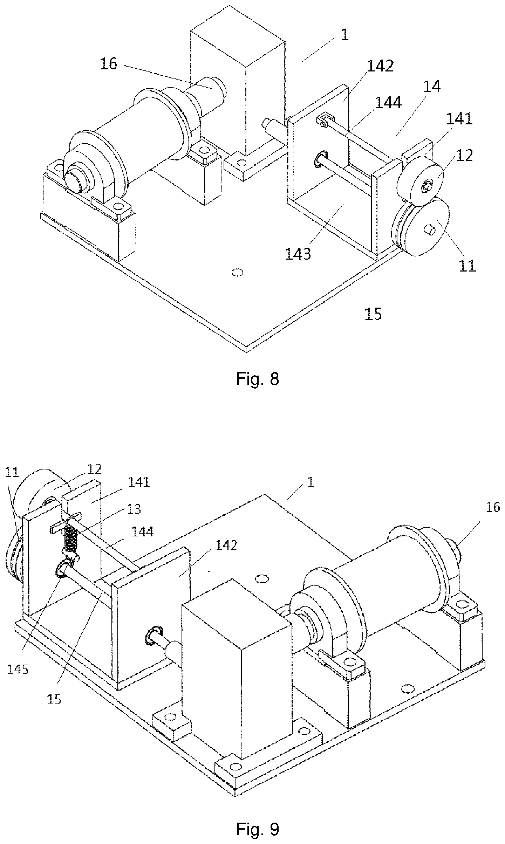

Specifically, as shown in Figs. 8 and 9, the actuator further includes an input shaft 15 and an output shaft 16, the output wheel 11 is connected to the input shaft 15, and the input shaft 15 is drivingly connected to the output shaft 16. A support 14 in the actuator includes a first vertical plate 141, a second vertical plate 142 and a bottom plate 143. Both the first vertical plate 141 and the second vertical plate 142 are perpendicularly arranged on the bottom plate 143. There is a gap between the first vertical plate 141 and the second vertical plate 142, and the input shaft sequentially passes through the first vertical plate 141 and the second vertical plate 142 to link with the output shaft. The output wheel 11 on the input shaft is located on a side of the first vertical plate 141 away from the second vertical plate 142, and the auxiliary wheel 12 is rotatably arranged on a first end of a connecting rod 144. A second end of the connecting rod 144 passes through the first vertical plate 141 and is arranged on the second vertical plate 142, and the connecting rod 144 is parallel to the input shaft.

Specifically, a through hole in the first vertical plate 141 for the connecting rod 144 to pass through is configured as a slit-form opening, and the slit-form opening has an extending direction perpendicular to the direction in which the transmission rope 2 passes through the gap between the output wheel 11 and the auxiliary wheel 12. The connecting rod 144 can slide along the slit-form opening, and the second end of the connecting rod 144 is hinged onto the first vertical plate 141. The connecting rod 144 is further connected to a spring 13, and the spring 13 is fixed to a fixing bar 145. The fixing bar 145 is arranged on the first vertical plate 141. Both the fixing bar 145 and the spring 13 are located on a side of the first vertical plate 141 approaching to the second vertical plate 142. The expansion and contraction direction of the spring 13 is perpendicular to the axial direction of the connecting rod 144. When the connecting rod 144 is located at the bottom of the slit-form opening, the spring 13 is in a natural state. When the connecting rod 144 deviates from the bottom of the slit-form opening, the spring 13 is in a stretched state.

Of course, in other specific embodiments, the input shaft connected to the output wheel in the actuator may be directly used as the output shaft, and the output wheel may also be directly connected to an actuator that needs to be driven.

### Embodiment 6

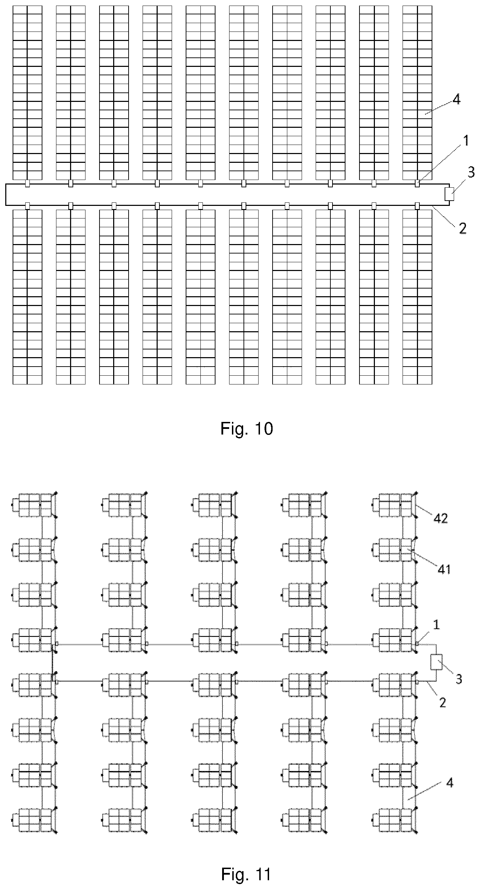

As shown in Fig. 10, disclosed in this specific embodiment is a group-control tracking support, including a quantitative output apparatus disclosed in Embodiment
1. In this embodiment, there are a plurality of actuators 1 in the quantitative output apparatus, the transmission rope 2 sequentially passes through the plurality of actuators 1, the plurality of actuators 1 are connected in series on the transmission rope 2, and the actuator 1 further includes an output shaft drivingly connected to the output wheel. A group control system further includes a plurality of sub-tracking supports 4 that are in one-to-one correspondence with the actuators 1, and the input shaft of the sub-tracking support 4 is connected to the output shaft of the actuator 1.

In this embodiment, the sub-tracking support includes a main beam. The main beam is rotatably disposed on a base, and the main beam is provided with a plurality of photovoltaic assembly boards. The main beam is rotatably arranged on the support, and the output shaft of the actuator drives the main beam to rotate through a rotary unit. The group-control tracking support in this embodiment can be applied to a flat single-axis system.

In this specific embodiment, the transmission rope has a plurality of thin rope portions and a plurality of thick rope portions, and the plurality of thick rope portions and the plurality of thin rope portions are arranged at intervals.

A photovoltaic group control method using the above group-control tracking support is further disclosed in this specific embodiment. The driving device 3 drives the transmission rope 2 to move. The transmission rope 2 includes a thin rope portion and a thick rope portion connected along its running direction. The transmission rope 2 is guided between the output wheels and auxiliary wheels of the plurality of actuators 1, and through the passage portion, the plurality of actuators 1 are connected in series on the transmission rope 2.

When the thin rope portion of the transmission rope 2 passes through the passage portion 1, the output wheel of the actuator 1 is in a stationary state, and the photovoltaic assembly board in the sub-tracking support connected to the actuator is in a stationary state. That is to say, when the thin rope portion of the transmission rope 2 passes through the passage portion 1, the angle of the photovoltaic assembly board cannot be adjusted.

When the thick rope portion of the transmission rope 2 passes through the actuator 1, the auxiliary wheel applies pressure to the transmission rope 2, so that the transmission rope 2 is tightly attached to the output wheel, and the thick rope portion of the transmission rope 2 frictionally drives the output wheel of the actuator 1 to rotate. The output wheel drives the output shaft in the actuator 1, and the output shaft further drives the input shaft of the sub-tracking support 4 correspondingly connected to the respective actuator 1. That is to say, when the thick rope portion of the transmission rope 2 passes through the passage portion 1, it can adjust the angle of the photovoltaic assembly board.

In the method, the thin rope portion(s) and the thick rope portion(s) in the transmission rope are arranged according to a preset manner, so that the transmission rope drives the plurality of actuators to operate according to preset rules, and further the angle of the respective photovoltaic assembly board in the plurality of sub-tracking supports is adjusted according to preset rules. In addition to the photovoltaic assembly board, the load on the main beam may be provided as a photothermal assembly or other forms of load.

### Embodiment 7

Disclosed in this specific embodiment is another group-control tracking support, the structure of which is substantially the same as that of Specific Embodiment 5 except that only the specific structure of the sub-tracking support is different.

As shown in Fig. 11, in this embodiment, the sub-tracking support includes a plurality of bases and a plurality of main beams. The main beams are rotatably arranged on the bases, and one main beam is fixedly provided with a photovoltaic assembly board 41. Each main beam corresponds to a slewing mechanism, and adjacent slewing mechanisms are connected through a sub-transmission rope 42. The plurality of slewing mechanisms are connected in series on the respective sub-transmission ropes 42. The sub-transmission rope 42 is connected to a sub-driving device. The sub-driving device is used to drive the sub-transmission rope 42 to move. When the sub-transmission rope 42 moves, the slewing mechanism is driven, and the slewing mechanism drives the corresponding main beam to rotate. The input shaft of the sub-driving device is connected to the output shaft of the actuator corresponding to the sub-tracking support.

The plurality of sub-tracking supports in the group-control tracking support in this embodiment are linked through a general transmission rope, and the angle changes of multiple main beams in one sub-tracking support are also driven through the operation of a sub-output rope. This arrangement allows the group-control tracking support to be suitable for more complicated terrain, and its adaptability is better. Moreover, there is no need to install an electric control system for each group of supports, the structure is simplified, and the production cost is low. The group-control tracking support in this embodiment can be applied to an oblique single-axis system. Of course, in addition to the photovoltaic assembly board, its load may be provided as a photothermal assembly board or other forms of load.

### Specific Embodiment 7

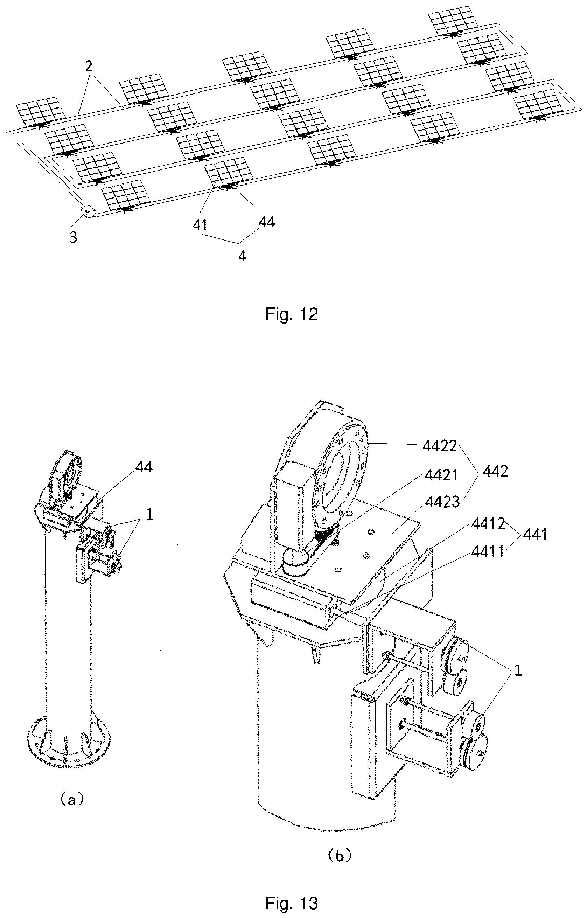

As shown in Figs. 12 and 13, disclosed in this specific embodiment is another group-control tracking support, including a pair of transmission ropes 2, a pair of driving devices 3, multiple pairs of actuators 1 and a plurality of sub-tracking supports 4. The transmission rope 2 is a wirerope, the driving devices 3 are in one-to-one correspondence with the transmission ropes 2, and the driving device 3 is used for tensioning the corresponding transmission rope 2 and driving it to move. Specifically, the sub-tracking support 4 in this embodiment includes a main beam and a base. The main beam is rotatably arranged on the base. The main beam is provided with a photovoltaic assembly board 41, and the photovoltaic module board 41 is fixedly arranged on the main beam. The plurality of actuators 1 are connected in series on the transmission ropes 2, the number of actuators 1 on the pair of transmission ropes 2 is the same, and the actuators 1 on one transmission rope 2 are in one-to-one correspondence with (that is, are arranged in pair with) the actuators 1 on the other transmission rope 2. The actuator 1 includes an input shaft and an output shaft, the input shaft of the actuator 1 is linked with its output shaft, and the output wheel of the actuator 1 is in close contact with the transmission rope 2. When the moving thick rope portion of the transmission rope 2 moves into the actuator, the thick rope portion drives the input shaft of the actuator 1 to rotate, and the input shaft of the actuator 1 drives the output shaft linked to it to rotate.

Each sub-tracking support 4 includes a dual-degree-of-freedom slewing mechanism 44. The dual-degree-of-freedom slewing mechanism 44 includes two mutually independent input shafts. The two input shafts in the dual-degree-of-freedom slewing mechanism 44 are used to adjust the angles of the photovoltaic assembly board 41 in the sub-tracking support 4 in two degrees of freedom, respectively. One input shaft of the dual-degree-of-freedom slewing mechanism 44 is connected to the output shaft of the actuator 1 on one transmission rope 2, and the other input shaft of the dual-degree-of-freedom slewing mechanism 44 is connected to the output shaft of the actuator 1 on the other transmission rope 2. One double-degree-of-freedom slewing mechanism 44 corresponds to a pair of actuators 1.

Specifically, the dual-degree-of-freedom slewing mechanism 44 includes a first slewing mechanism 441 and a second slewing mechanism 442. The first slewing mechanism 441 and the second slewing mechanism 442 each include an input shaft and an output shaft that are linked. The input shaft 4411 of the first slewing mechanism 441 is connected to the output shaft of the actuator on one transmission rope, and the input shaft 4421 of the second slewing mechanism is connected to the output shaft of the actuator on the other transmission rope. The output shaft 4422 of the second slewing mechanism 442 is rotatably arranged on the fixing plate 4423, and the fixing plate 4423 is fixedly connected to the output shaft 4412 of the first slewing mechanism 441. The output shaft 4422 of the second slewing mechanism 442 is connected to the main beam (a structure used for installing the photovoltaic assembly board) of the sub-tracking support corresponding to it. The output shaft 4412 of the first slewing mechanism 441 is used for adjusting the angle of the photovoltaic assembly board 41 in the sub-tracking support 4 in a first degree of freedom, and the output shaft of the second slewing mechanism is used for adjusting the angle of the photovoltaic assembly board 41 in the sub-tracking support 4 in a second degree of freedom.

Specifically, as shown in Fig. 13, an upper transmission rope in the figure drives the input shaft 4411 of the first slewing mechanism 441 to rotate through an upper actuator, and the output shaft 4412 of the first slewing mechanism 441 rotates and drives the fixing plate 4423 to rotate. The fixing plate 4423 further drives the second slewing mechanism 442 connected to the photovoltaic assembly and arranged on the fixing plate 4423 to rotate, so that the angle of the photovoltaic assembly board 41 on the sub-tracking support 4 connected to the second slewing mechanism 442 in the first degree of freedom can be adjusted. When a lower transmission rope drives the input shaft 4421 of the second slewing mechanism 442 to rotate through a lower actuator, and the output shaft 4422 of the second slewing mechanism 442 rotates and adjusts the angle of the photovoltaic assembly board 41 connected to it in the second degree of freedom.

That is to say, the group-control tracking support in this specific embodiment drives the actuators through a pair of transmission ropes to simultaneously adjust the angles of the photovoltaic assembly boards in two degrees of freedom.

It needs to be noted that in the above embodiments, in addition to the wirerope used as the transmission rope, it is also possible, but not part of the invention as claimed, to drive a belt or other structures, as long as it can drive the output wheel. In addition to being used in the group-control tracking support to adjust the angle of the photovoltaic assembly board, the quantitative output apparatus can be used in other devices, which will not be repeated here.

It should be noted that the above embodiments can be freely combined as needed. The above are only the preferred embodiments of the present invention. It should be pointed out that for those of ordinary skill in the art, several improvements and modifications can be made without departing from the principles of the present invention.

## Claims

1. A quantitative output apparatus, which comprises:
an actuator (1) comprising an output wheel (11), an auxiliary wheel (12) and a passage portion;
a transmission rope (2) guided between the output wheel and the auxiliary wheel and
passing through the passage portion; and
a driving device (3) for driving the transmission rope to move in the passage portion of the actuator;
**characterized in that**
the transmission rope (2) comprises a thick rope portion (22) and a thin rope portion (21); when the thin rope portion passes through the passage portion, the thin rope portion (21) does not drive the output wheel (11) to rotate; and when the thick rope portion passes through the passage portion, the thick rope portion (22) frictionally drives the output wheel (11) to rotate.

2. The quantitative output apparatus according to claim 1, **characterized in that**
the output wheel (11) and the auxiliary wheel (12) are arranged in parallel, the passage portion is a gap between the auxiliary wheel and the output wheel, the gap is greater than a diameter of the thin rope portion (21) and less than a diameter of the thick rope portion (22), and when the thick rope portion (22) of the transmission rope (2) passes through the passage portion, the auxiliary wheel (12) applies pressure to the transmission rope (2), so that the thick rope portion (22) is tightly attached to the output wheel (11) and frictionally drives the output wheel to rotate.

3. The quantitative output apparatus according to claim 1, **characterized in that**
the output wheel (11) and the auxiliary wheel (12) are arranged in parallel, the passage portion is an annular groove arranged on an outer periphery of the output wheel (11), a groove width of the annular groove is greater than a diameter of the thin rope portion (21) and less than a diameter of the thick rope portion (22), and when the thick rope portion (22) of the transmission rope (2) passes through the passage portion, the auxiliary wheel (12) applies pressure to the transmission rope (2), so that the thick rope portion (22) is tightly attached to the output wheel (11) and frictionally drives the output wheel to rotate.

4. The quantitative output apparatus according to claim 3, **characterized in that**
a rotatable sleeve is provided in the annular groove, and when the thin rope portion (21) of the transmission rope (2) passes through the passage portion, the auxiliary wheel (12) applies pressure to the transmission rope (2), so that the thin rope portion (21) is tightly attached to the sleeve and drives the sleeve to rotate;
and/or;
the annular groove is configured as a stepped groove comprising a first annular groove (111) and a second annular groove (112), wherein a groove width of the first stepped groove is not less than the diameter of the thin rope portion (21), and not greater than the diameter of the thick rope portion (22), a groove width of the second stepped groove is not less than the diameter of the thick rope portion (22), and a sleeve is provided in the first stepped groove.

5. The quantitative output apparatus according to claim 4, **characterized in that**
the actuator (1) comprises one auxiliary wheel (12), the auxiliary wheel is arranged at one side of the output wheel (11), the transmission rope (2) is wound around the auxiliary wheel and the output wheel, and the transmission rope (2) passes through the auxiliary wheel (12) and the output wheel (11) to form an S-shaped structure; or;
the actuator (1) comprises a pair of auxiliary wheels (12), the pair of auxiliary wheels is arranged at two sides of the output wheel (11), and the pair of the auxiliary wheels presses the transmission rope (2) from both sides of the output wheel; and along a moving direction of the transmission rope, in the actuator, the transmission rope (2) is first wound on one of the auxiliary wheels (12), then wound on the output wheel (11), and finally wound on the other auxiliary wheel (12).

6. The quantitative output apparatus according to claim 1, **characterized in that**
the transmission rope (2) comprises multiple sections of thick rope portions (22) and multiple sections of thin rope portions (21), and the thick rope portions and the thin rope portions are arranged at intervals.

7. The quantitative output apparatus according to claim 1, **characterized in that**
the auxiliary wheel (12) is connected to a support through an elastic member, and when the thick rope portion (22) of the transmission rope (2) passes through the actuator (1), the auxiliary wheel (12) applies pressure to the transmission rope (2), so that the transmission rope (2) is tightly attached to the output wheel (11).

8. The quantitative output apparatus according to any one of claims 1 to 7, **characterized in that** one or more thin rope portions (21) and one or more thick rope portions (22) in the transmission rope (2) are arranged in a preset manner, and the transmission rope (2) drives the actuator (1) to operate according to preset rules.

9. A group-control tracking support, **characterized in that**
it comprises a quantitative output apparatus according to any one of claims 1 to 8, and there are a plurality of actuators (1) in the quantitative output apparatus, and the plurality of actuators are connected in series on the transmission rope (2); and
the group control system further comprises a plurality of sub-tracking supports (4), the sub-tracking supports (4) are in one-to-one correspondence with the actuators (1), and input shafts of the sub-tracking supports (4) are drivingly connected to the respective output wheels (11) of the actuators (1).

10. A group control method, wherein
a driving device (3) drives a transmission rope (2) to move, the transmission rope comprising a thin rope portion (21) and a thick rope portion (22) connected along a running direction thereof, and the transmission rope (2) being sequentially guided between output wheels (11) and auxiliary wheels (12) of a plurality of actuators (1) and passing through passage portions of the actuators (1);
when the thin rope portion (21) of the transmission rope (2) passes through the passage portions of the actuators (1), the thin rope portion (21) of the transmission rope does not drive the output wheels (11) to rotate;
when the thick rope portion (22) of the transmission rope (2) passes through the passage portions of the actuators (1), the auxiliary wheels (12) apply pressure to the transmission rope (2) so that the transmission rope is tightly attached to the output wheels (11), and the thick rope portion (22) of the transmission rope frictionally drives the output wheels (11) of the actuators (1) to rotate, and the output wheels (11) drive input shafts of sub-tracking supports (4) correspondingly connected to the actuators (1); and
the thin rope portion (21) and the thick rope portion (22) in the transmission rope (2) are arranged in a preset manner, and the transmission rope (2) drives a plurality of the sub-tracking supports (4) to operate according to preset rules.

## Patentansprüche

1. Quantitative Ausgangsvorrichtung, umfassend:
ein Stellglied (1) mit einem Ausgangsrad (11), einem Hilfsrad (12) und einem Durchgangsabschnitt;
ein Übertragungsseil (2), das zwischen dem Ausgangsrad und dem Hilfsrad geführt ist und durch den Durchgangsabschnitt durchläuft, und
eine Antriebsvorrichtung (3) zum Antreiben des Übertragungsseils, damit es sich in den Durchgangsabschnitt des Stellglieds bewegt;
**dadurch gekennzeichnet, dass** das Übertragungsseil (2) einen dicken Seilabschnitt (22) und einen dünnen Seilabschnitt (21) aufweist; wenn der dünne Seilabschnitt durch den Durchgangsabschnitt durchläuft, treibt der dünne Seilabschnitt (21) das Ausgangsrad (11) nicht zur Drehung an; und wenn der dicke Seilabschnitt durch den Durchgangsabschnitt durchläuft, treibt der dicke Seilabschnitt (22) das Ausgangsrad (11) durch Reibung zur Drehung an.

2. Quantitative Ausgangsvorrichtung nach Anspruch 1, **dadurch gekennzeichnet,**
**dass** das Ausgangsrad (11) und das Hilfsrad (12) parallel angeordnet sind, der Durchgangsabschnitt ein Spalt zwischen dem Hilfsrad und dem Ausgangsrad ist, wobei der Spalt größer als ein Durchmesser des dünnen Seilabschnitts (21) und kleiner als ein Durchmesser des dicken Seilabschnitts (22) ist, und das Hilfsrad (12) Druck auf das Übertragungsseil (2) ausübt, wenn der dicke Seilabschnitt (22) des Übertragungsseils (2) durch den Durchgangsabschnitt durchläuft, so dass der dicke Seilabschnitt (22) fest an dem Ausgangsrad (11) befestigt ist und das Ausgangsrad durch Reibung zur Drehung antreibt.

3. Quantitative Ausgangsvorrichtung nach Anspruch 1, **dadurch gekennzeichnet, dass** das Ausgangsrad (11) und das Hilfsrad (12) parallel angeordnet sind, der Durchgangsabschnitt eine Ringnut ist, die an einem Außenumfang des Ausgangsrads (11) angeordnet ist, wobei eine Nutbreite der Ringnut größer als ein Durchmesser des dünnen Seilabschnitts (21) und kleiner als ein Durchmesser des dicken Seilabschnitts (22) ist, und das Hilfsrad (12) Druck auf das Übertragungsseil (2) ausübt, wenn der dicke Seilabschnitt (22) des Übertragungsseils (2) durch den Durchgangsabschnitt durchläuft, so dass der dicke Seilabschnitt (22) fest an dem Ausgangsrad (11) befestigt ist und das Ausgangsrad durch Reibung zur Drehung antreibt.

4. Quantitative Ausgangsvorrichtung nach Anspruch 3, **dadurch gekennzeichnet,**
**dass** eine drehbare Hülse in der Ringnut vorgesehen ist, und das Hilfsrad (12) Druck auf das Übertragungsseil (2) ausübt, wenn der dünne Seilabschnitt (21) des Übertragungsseils (2) durch den Durchgangsabschnitt durchläuft, so dass der dünne Seilabschnitt (21) fest an der Hülse befestigt ist und die Hülse zur Drehung antreibt, und/oder;
**dass** die Ringnut als eine gestufte Nut ausgebildet ist, die eine erste Ringnut (111) und eine zweite Ringnut (112) umfasst, wobei eine Nutbreite der ersten gestuften Nut nicht kleiner als der Durchmesser des dünnen Seilabschnitts (21) und nicht größer als der Durchmesser des dicken Seilabschnitts (22) ist, wobei eine Nutbreite der zweiten gestuften Nut nicht kleiner als der Durchmesser des dicken Seilabschnitts (22) ist, und eine Hülse in der ersten gestuften Nut vorgesehen ist.

5. Quantitative Ausgangsvorrichtung nach Anspruch 4, **dadurch gekennzeichnet, dass** das Stellglied (1) genau ein Hilfsrad (12) umfasst, das Hilfsrad auf einer Seite des Ausgangsrads (11) angeordnet ist, das Übertragungsseil (2) um das Hilfsrad und das Ausgangsrad gewickelt ist, und das Übertragungsseil (2) durch das Hilfsrad (12) und das Ausgangsrad (11) durchläuft, um eine S-förmige Struktur zu bilden; oder das Stellglied (1) ein Paar von Hilfsrädern (12) umfasst, das Paar von Hilfsrädern auf zwei Seiten des Ausgangsrads (11) angeordnet ist, und das Paar von Hilfsrädern das Übertragungsseil (2) von beiden Seiten des Ausgangsrads drückt; und entlang einer Bewegungsrichtung des Übertragungsseils, in dem Stellglied, das Übertragungsseil (2) zuerst auf eines der Hilfsräder (12), dann auf das Ausgangsrad (11) und schließlich auf das andere Hilfsrad (12) gewickelt ist.

6. Quantitative Ausgangsvorrichtung nach Anspruch 1, **dadurch gekennzeichnet, dass** das Übertragungsseil (2) mehrere Abschnitte von dicken Seilabschnitten (22) und mehrere Abschnitte von dünnen Seilabschnitten (21) umfasst, und die dicken Seilabschnitte und die dünnen Seilabschnitte in Abständen angeordnet sind.

7. Quantitative Ausgangsvorrichtung nach Anspruch 1, **dadurch gekennzeichnet, dass** das Hilfsrad (12) über ein elastisches Element mit einem Träger verbunden ist, und das Hilfsrad (12) Druck auf das Übertragungsseil (2) ausübt, wenn der dicke Seilabschnitt (22) des Übertragungsseils (2) durch das Stellglied (1) durchläuft, so dass das Übertragungsseil (2) fest an dem Ausgangsrad (11) befestigt ist.

8. Quantitative Ausgangsvorrichtung nach einem der Ansprüche 1 bis 7, **dadurch gekennzeichnet, dass** ein oder mehrere dünne Seilabschnitte (21) und ein oder mehrere dicke Seilabschnitte (22) in dem Übertragungsseil (2) in einer vorgegebenen Weise angeordnet sind, und das Übertragungsseil (2) das Stellglied (1) antreibt, um nach vorgegebenen Regeln zu betreiben.

9. Trackingsunterstützung für Gruppensteuerung, **dadurch gekennzeichnet,**
**dass** sie eine quantitative Ausgangsvorrichtung gemäß einem der Ansprüche 1 bis 8 umfasst, und es eine Mehrzahl von Stellgliedern (1) in der quantitativen Ausgangsvorrichtung gibt, und die Mehrzahl von Stellgliedern in Reihe auf dem Übertragungseil (2) verbunden sind, und
**dass** das Gruppensteuerungssystem ferner eine Mehrzahl von Sub-Trackingsunterstützungen (4) umfasst, die Sub-Trackingsunterstützungen (4) in Eins-zu-Eins-Korrespondenz mit den Stellgliedern (1) stehen, und Eingangswellen der Sub-Trackingsunterstützungen (4) mit den jeweiligen Ausgangsrädern (11) der Stellglieder (1) antreibend verbunden sind.

10. Ein Gruppensteuerungsverfahren, bei dem
eine Antriebsvorrichtung (3) ein Übertragungsseil (2) zur Bewegung antreibt, wobei das Übertragungsseil einen dünnen Seilabschnitt (21) und einen dicken Seilabschnitt (22) umfasst, die entlang einer Laufrichtung davon verbunden sind, und das Übertragungsseil (2) sequenziell zwischen Ausgangsrädern (11) und Hilfsrädern (12) einer Mehrzahl von Stellgliedern (1) geführt wird und durch Durchgangsabschnitte der Stellglieder (1) durchläuft,
wenn der dünne Seilabschnitt (21) des Übertragungsseils (2) durch die Durchgangsabschnitte der Stellglieder (1) durchläuft, treibt der dünne Seilabschnitt (21) des Übertragungsseils die Ausgangsräder (11) nicht zur Drehung an; wenn der dicke Seilabschnitt (22) des Übertragungsseils (2) durch die Durchgangsabschnitte der Stellglieder (1) durchläuft, üben die Hilfsräder (12) Druck auf das Übertragungsseil (2) aus, so dass das Übertragungsseil fest an den Ausgangsrädern (11) befestigt ist, und der dicke Seilabschnitt (22) des Übertragungsseils die Ausgangsräder (11) der Stellglieder (1) durch Reibung zur Drehung antreibt, und die Ausgangsräder (11) Eingangswellen von Sub-Trackingsunterstützungen (4) antreiben, die entsprechend mit den Stellgliedern (1) verbunden sind, und
der dünne Seilabschnitt (21) und der dicke Seilabschnitt (22) im Übertragungsseil (2) in einer vorgegebenen Weise angeordnet sind, und das Übertragungsseil (2) eine Mehrzahl von der Sub-Trackingsunterstützungen (4) antreibt, um nach vorgegebenen Regeln zu betreiben.

## Revendications

1. Un dispositif de sortie quantitative, qui comprend :
un actionneur (1) comprenant une roue de sortie (11), une roue auxiliaire (12) et une partie de passage ;
un câble de transmission (2) guidé entre la roue de sortie et la roue auxiliaire et passant à travers la partie de passage ; et
un dispositif d'entraînement (3) pour entraîner le câble de transmission pour qu'il se déplace dans la partie de passage de l'actionneur ;
**caractérisé en ce que**
le câble de transmission (2) comprend une partie de câble épaisse (22) et une partie de câble mince (21) ; lorsque la partie de câble mince passe à travers la partie de passage, la partie de câble mince (21) n'entraîne pas la roue de sortie (11) en rotation ; et lorsque la partie de câble épaisse passe à travers la partie de passage, la partie de câble épaisse (22) entraîne la roue de sortie (11) en rotation par friction.

2. Le dispositif de sortie quantitative selon la revendication 1, **caractérisé en ce que**:
la roue de sortie (11) et la roue auxiliaire (12) sont disposées en parallèle, la partie de passage est un espace entre la roue auxiliaire et la roue de sortie, l'espace est supérieur à un diamètre de la partie de câble mince (21) et inférieur à un diamètre de la partie de câble épaisse (22),
et lorsque la partie de câble épaisse (22) du câble de transmission (2) passe à travers la partie de passage, la roue auxiliaire (12) applique une pression sur le câble de transmission (2), de sorte que la partie de câble épaisse (22) est fermement attachée à la roue de sortie (11) et entraîne la rotation de la roue de sortie par friction.

3. Le dispositif de sortie quantitative selon la revendication 1, **caractérisé en ce que**:
la roue de sortie (11) et la roue auxiliaire (12) sont disposées en parallèle, la partie de passage est une rainure annulaire disposée sur une périphérie extérieure de la roue de sortie (11), une largeur de rainure de la rainure annulaire est supérieure à un diamètre de la partie de câble mince (21) et inférieur à un diamètre de la partie de câble épaisse (22), et lorsque la partie de câble épaisse (22) du câble de transmission (2) passe à travers la partie de passage, la roue auxiliaire (12) applique une pression sur le câble de transmission (2), de sorte que la partie de câble épaisse (22) est fermement attachée à la roue de sortie (11) et entraîne la rotation de la roue de sortie par friction.

4. Le dispositif de sortie quantitative selon la revendication 3, **caractérisé en ce que**:
un manchon rotatif est prévu dans la rainure annulaire, et lorsque la partie de câble mince (21) du câble de transmission (2) passe à travers la partie de passage, la roue auxiliaire (12) applique une pression sur le câble de transmission (2), de sorte que la partie de câble mince (21) est attachée au manchon et entraîne le manchon en rotation ;
et/ou ;
la rainure annulaire est configurée comme une rainure étagée comprenant une première rainure annulaire (111) et une seconde rainure annulaire (112), dans laquelle une largeur de rainure de la première rainure étagée n'est pas inférieure au diamètre de la partie de câble mince (21), et n'est pas supérieure au diamètre de la partie de câble épaisse (22), une largeur de rainure de la seconde rainure étagée n'est pas inférieure au diamètre de la partie de câble épaisse (22), et un manchon est prévu dans la première rainure étagée.

5. Le dispositif de sortie quantitative selon la revendication 4, **caractérisé en ce que**:
l'actionneur (1) comprend une roue auxiliaire (12), la roue auxiliaire est disposée sur un côté de la roue de sortie (11), le câble de transmission (2) est enroulé autour de la roue auxiliaire et de la roue de sortie, et le câble de transmission (2) passe à travers la roue auxiliaire (12) et la roue de sortie (11) pour former une structure en forme de S ;
ou ;
l'actionneur (1) comprend une paire de roues auxiliaires (12), la paire de roues auxiliaires est disposée sur deux côtés de la roue de sortie (11), et la paire de roues auxiliaires presse le câble de transmission (2) depuis les deux côtés de la roue de sortie ; et le long d'une direction de déplacement du câble de transmission, dans l'actionneur, le câble de transmission (2) est d'abord enroulé sur l'une des roues auxiliaires (12), puis enroulé sur la roue de sortie (11), et
enfin enroulé sur l'autre roue auxiliaire (12).

6. Le dispositif de sortie quantitative selon la revendication 1, **caractérisé en ce que**:
le câble de transmission (2) comprend de multiples sections de parties de câble épaisses (22) et de multiples sections de parties de câble minces (21), et les parties de câble épaisses et les parties de câble minces sont disposées à intervalles.

7. Le dispositif de sortie quantitative selon la revendication 1, **caractérisé en ce que**:
la roue auxiliaire (12) est reliée à un support par l'intermédiaire d'un élément élastique, et
lorsque la partie de câble épaisse (22) du câble de transmission (2) passe à travers l'actionneur (1), la roue auxiliaire (12) applique une pression sur le câble de transmission (2),
de sorte que le câble de transmission (2) soit fermement attaché à la roue de sortie (11).

8. Le dispositif de sortie quantitative selon l'une quelconque des revendications 1 à 7, **caractérisé en ce qu'**une ou plusieurs parties de câble mince (21) et une ou plusieurs parties de câble épaisse (22) dans le câble de transmission (2) sont disposées d'une manière prédéfinie, et le câble de transmission (2) entraîne l'actionneur (1) pour fonctionner selon des règles prédéfinies.

9. Un support de suivi de commande de groupe, **caractérisé en ce que** :
il comprend un dispositif de sortie quantitative selon l'une quelconque des revendications 1 à 8, et il y a une pluralité d'actionneurs (1) dans le dispositif de sortie quantitative, et la pluralité d'actionneurs sont connectés en série sur le câble de transmission (2) ; et
le système de commande de groupe comprend en outre une pluralité de sous-supports de suivi (4), les sous-supports de suivi (4) sont en correspondance univoque avec les actionneurs (1), et des arbres d'entrée des sous-supports de suivi ( 4) sont reliés en entraînement aux roues de sortie (11) respectives des actionneurs (1).

10. Un procédé de commande de groupe, dans lequel
un dispositif d'entraînement (3) entraîne le mouvement d'un câble de transmission (2) comprenant une partie de câble mince (21) et une partie de câble épaisse (22) ) reliées le long de leur direction de déplacement, et le câble de transmission (2) étant guidé de manière séquentielle entre des roues de sortie (11) et des roues auxiliaires (12) d'une pluralité d'actionneurs (1) et passant à travers des parties de passage des actionneurs (1) ; lorsque la partie de câble mince (21) du câble de transmission (2) passe à travers les parties de passage des actionneurs (1), la partie de câble mince (21) du câble de transmission n'entraîne pas les roues de sortie (11) en rotation ;
lorsque la partie de câble épaisse (22) du câble de transmission (2) passe à travers les parties de passage des actionneurs (1), les roues auxiliaires (12) appliquent une pression sur le câble de transmission (2) de sorte que le câble de transmission est fermement attaché aux roues de sortie (11), et la partie de câble épaisse (22) du câble de transmission entraîne les roues de sortie (11) des actionneurs (1) à tourner par friction, et les roues de sortie (11) entraînent les arbres d'entrée des sous-supports de suivi (4) relié en conséquence aux actionneurs (1) ; et la partie de câble mince (21) et la partie de câble épais (22) dans le câble de transmission (2) sont disposées d'une manière prédéfinie, et le câble de transmission (2) entraîne une pluralité de sous-supports de suivi (4) pour fonctionner selon des règles prédéfinies.
